# EUROPEAN PATENT APPLICATION

(11) **EP 4 610 631 A1**
(43) Date of publication of application: **03.09.2025**
(21) Application number: 25156562.8
(22) Date of filing: 07.02.2025
(51) Int. Cl.: G01N 21/86, G01B 11/00, G01N 21/88, G01N 21/89, G01N 21/95, G06T 7/00, H01M 10/00, G06V 20/52, G01N 21/84

(54) **OBJECT OVERLAP DETECTION APPARATUS AND METHOD**

(30) Priority: 29.02.2024 KR 20240030272
(71) Applicant: SAMSUNG SDI CO., LTD., Yongin-si, Gyeonggi-do 17084 (KR)
(72) Inventor: Lee, Sungwon, 17084 Yongin-si, Gyeonggi-do (KR); Kim, Joonkil, 17084 Yongin-si, Gyeonggi-do (KR); Hwang, Sunuk, 17084 Yongin-si, Gyeonggi-do (KR)
(74) Representative: Gulde & Partner

(57) **Abstract**

An object overlap detection apparatus includes one or more photographing units configured to photograph objects from multiple angles. A determining unit is configured to determine whether there are overlapping objects by analyzing an image obtained by photographing the objects in a vertical direction using the one or more photographing units. The determining unit is also configured to determine whether there are overlapping objects by analyzing an image obtained by photographing a side of using the one or more photographing units. A controller is configured to receive information indicating whether the objects overlap from the determination units and to control one or more of an alarm signal, an operation of the photographing units, and transport of the objects.

## Description

### BACKGROUND

### (a) Field

The present disclosure relates to an object overlap detection apparatus and an object overlap detection method.

### (b) Description of the Related Art

Rechargeable batteries are manufactured in various shapes such as cylindrical and prismatic. A stack process may be performed in a manufacturing process of a prismatic rechargeable battery. The stack process manufactures an electrode assembly by stacking plates cut into a certain shape. In such a process, a plate cut into a certain shape is called a sheet.

In the stack process, supplied sheets are transported and stacked. Main units in the stacking process include a stack unit, a conveyor, and a holding unit. A unit of stacking sheets is called the stack unit. The conveyor transports sheets. When sheets are supplied to the stack process, the holding unit moves the sheets onto the conveyor and moves the sheets to the stack unit by conveyor action.

A malfunction in the manufacturing facility can cause a situation where an additional sheet is positioned on the conveyor where a sheet has already been positioned. If two sheets are overlapped on the conveyor, a problem occurs during a product manufacturing process.

### SUMMARY

The present disclosure provides an object overlap detection apparatus and an object overlap detection method, capable of accurately detecting a state in which the plates overlap each other during a process of transporting them.

However, the technical objects of the present disclosure are not limited to the objects mentioned above, and other technical objects not mentioned can be clearly understood by those skilled in the art from the description of the claims.

An embodiment of the present disclosure provides an object overlap detection apparatus including: one or more photographing units configured to photograph objects from multiple angles; a determining unit configured to determine at least one of (i) whether there are overlapping objects by analyzing an image obtained by photographing the objects in a vertical direction using the one or more photographing units, and (ii) determine whether there are overlapping objects by analyzing an image obtained by photographing a side of the objects using the one or more photographing units; and a controller configured to receive indicating whether the objects overlap from the determination units and to control one or more of an alarm signal, an operation of the photographing units, and transport of the objects.

The photographing unit may include: a lighting member spaced apart from the objects and configured to emit light towards the objects; a reflecting member positioned adjacent to the objects and configured to reflect an image of the objects; and a photographing member configured to photograph the image of the objects reflected by the reflecting member.

The photographing unit may include: a body portion including a first frame and a second frame that is movable relative to the first frame; and a camera unit positioned inside the body portion, the camera being rotatable in the vertical direction relative to the body portion.

The photographing unit may further include a position adjustment member coupled to the photographing member and configured to move the photographing member in a direction parallel to a direction in which the objects are transported.

The lighting member may include: a first lighting unit configured to emit light towards the object; one or more second lighting units rotatably coupled to the first lighting unit and configured to emit light towards the objects; and a lighting driver configured to rotate the one or more second lighting units relative to the first lighting unit.

The reflecting member may include: a support unit; a first reflector positioned in the vertical direction with respect to the support unit; a moving unit coupled to the first reflection part and configured to move relative to the support unit; a second reflector rotatably coupled to the first reflector; and a reflection driver configured to rotate the second reflector relative to the first reflector.

There may be two photographing units, and the two photographing units may are spaced apart from each other along a region where the objects are transported.

The controller may control the photographing unit to photograph the objects from top to bottom.

The determining unit may compare a shape of the objects in an image obtained by photographing the objects from top to bottom and a shape of an object in the reference image of one object, and the determining unit determines that there are overlapping objects based on the comparison.

The controller may control the photographing unit to photograph side surfaces of the objects.

The photographing unit may determine that two objects overlap when two boundaries are detected at an edge of an object in an image obtained by the one or more photographing units photographing side surfaces of the objects.

The determining unit may include: an image conversion unit configured to convert a color image obtained from the one or more photographing units into a black-and-white image; and a binarizing unit configured to generate a binarized image by performing binarization on pixels of the black-and-white image.

An embodiment of the present disclosure provides an object overlap detection method including: a photographing operation of acquiring one or more images by photographing an object from multiple angles; a determining operation of determining that there are overlapping objects by at least one of (i) analyzing an image obtained by photographing the objects in a vertical direction among images acquired in the photographing operation and (ii) analyzing an image obtained by photographing a side of the objects in the photographing operation; and a control operation of notifying outside world that the objects are overlapped and controlling transport of the objects if it is determined in the determining operation that there are overlapping objects.

The object may be photographed from above to below in the photographing operation.

In the determining operation, a shape of the objects in an image obtained by photographing the objects from top to bottom and a shape of the object in a reference image of one object may be compared, and it may be determined that there are overlapping objects based on the comparison.

The determining operation may include a width comparison operation of comparing a length of the objects in a width direction in an image obtained by photographing the objects from top to bottom in the photographing operation and a length in a width direction of one object in a reference image.

The determining operation may include a length comparison operation of comparing a length of the objects in the longitudinal direction in an image obtained by photographing the objects from top to bottom in the photographing operation and a length in a longitudinal direction of one object in a reference image.

A side surface of the object may be photographed in the photographing operation.

The determining operation may include a boundary detection operation of determining that two objects overlap when two boundaries are detected at an edge of the objects in an image obtained by photographing side surfaces of the objects in the photographing operation.

The determining operation may include: an image conversion operation of converting a color image obtained in the photographing operation into a black-and-white image; and a binarizing operation of generating a binarized image by performing binarization on pixels of the black-and-white image.

According to the present disclosure, the object overlap detection apparatus includes a photographing unit, a determining unit, and a controller. First, the photographing unit may photograph the object in the vertical direction, and the determining unit may detect that the objects are overlapped in a staggered manner. Next, the photographing unit may photograph the side surface of the object, and the determining unit may accurately detect that the objects are overlapped in the vertical direction without crossing each other.

In this way, the object overlap detection apparatus according to an embodiment of the present disclosure may accurately and quickly detect a state in which the objects are overlapped during a process of transporting the objects. Accordingly, it is possible to prevent objects remaining on the conveyor unit from being damaged when they collide with equipment performing a next process. Therefore, it is possible to prevent the objects from being fragmented, which would adversely affect manufacturing facilities and the quality of rechargeable batteries produced in the manufacturing facilities.

### BRIEF DESCRIPTION OF THE DRAWINGS

The following drawings attached to this specification illustrate preferred embodiments of the present disclosure, and together with the detailed description serve to further understand the technical ideas of the present disclosure, and thus the present disclosure should not be construed as limited to only the matters depicted in such drawings.
FIG. 1 illustrates a schematic diagram showing an object overlap detection apparatus according to an embodiment of the present disclosure.
FIG. 2 illustrates a top plan view showing a state in which one photographing unit is installed on a conveyor unit.
FIG. 3 illustrates a side view showing a photographing member included in a photographing unit.
FIG. 4 illustrates a top plan view showing a reflective member included in a photographing unit.
FIG. 5 illustrates a bottom view showing a lighting member included in a photographing unit.
FIG. 6 illustrates a top plan view showing a state in which two photographing units are installed on a conveyor unit.
FIG. 7 illustrates a front view showing a process in which a photographing unit photographs an object from top to bottom.
FIGS. 8A and 8B illustrate a drawing of a case in which objects overlap and a photograph of actual objects.
FIGS. 9A, 9B and 9C illustrate an image sequentially showing a process of a determining unit binarizing a black and white image.
FIGS. 10A and 10 B illustrate an image taken when objects overlap and a reference image when there is one object.
FIG. 11 illustrates a front view showing a process in which a photographing unit photographs a side surface of an object.
FIG. 12 illustrates an image taken when objects overlap.
FIG. 13 illustrates an enlarged image taken when objects overlap.
FIG. 14 illustrates a gray scale according to vertical displacement in the image taken when the objects of FIG. 13 overlap.
FIG. 15 illustrates a flowchart showing an object overlap detection method according to an embodiment of the present disclosure.
FIG. 16 illustrates a flowchart showing a determining operation included in an object overlap detection method.

### DETAILED DESCRIPTION

Hereinafter, embodiments of the present disclosure will be described in detail with reference to the accompanying drawings. Terms and words used in this specification and claims should not be construed as limited to their usual or dictionary meanings, but rather should be construed based on the principle that the inventor can appropriately define the concept of the terms in order to explain his or her invention in the best way, and that the interpretations must be consistent with a meanings of the technical ideas of the present disclosure. Since the embodiments described in the specification and the configurations shown in the drawings are merely some of the most preferable embodiments and configurations, they do not represent all of the technical ideas of the present disclosure, and it should be understood that various equivalents and modified examples, which may replace the embodiments, are possible.

Additionally, when used herein, "comprise," include," and/or "comprising, including" specifies the presence of the mentioned figures, numbers, steps, actions, members, elements and/or groups of these, and does not exclude the presence or addition of one or more other shapes, numbers, operations, members, elements and/or groups.

In addition, to facilitate understanding of the disclosure, the attached drawings are not drawn to actual scale and the dimensions of some components may be exaggerated. Furthermore, the same reference numbers may be assigned to the same components in different embodiments.

Stating that two objects of comparison are "the same" means that they are substantially the same. Therefore, substantially identical may include a deviation that is considered low in the art, for example, a deviation of less than 5%. Additionally, uniformity of a parameter in a certain region may mean uniformity from an average perspective.

Although the first, second, etc. are used to describe various components, it goes without saying that these components are not limited by these terms. These terms are only used to distinguish one component from another component, and unless specifically stated to the contrary, the first component may also be a second component.

Throughout the specification, unless otherwise stated, each component may be singular or plural.

Disposition of any component to the "upper (or lower) portion" of the component or to the "upper (or lower)" portion of the component may indicate that not only is an arbitrary component disposed in contact with the upper (or lower) surface of the component, but also other components may be interposed between the component and any component disposed on (or under) the component.

Additionally, if a component is described as "on," "connected to," or "coupled to" another component; the above components may be directly connected or connected to each other, but it should be understood that other components may be "interposed" between each component, or that each component may be "connected," "combined," or "connected" through other components.

As used herein, the term "and/or" includes any and all combinations of one or more of the associated listed items. Additionally, the use of "may" when describing embodiments of the present disclosure relates to "one or more embodiments of the present disclosure."

Expressions such as "one or more" and "one or more" preceding a list of elements modify the entire list of elements and do not modify individual elements in the list.

Throughout the specification, when referring to "A and/or B", this means A, B, or A and B, unless specifically stated to the contrary, and when referring to "C to D," this means C or higher and D or lower, unless specifically stated to the contrary.

When phrases such as "at least one selected from the group A, B, and C", "at least one selected from the group A, B, or C", "at least one selected from the group A, B, and C" and "at least one selected from the group A, B, and C" are used to specify a list of elements A, B, and C, the phrases may refer to any and all suitable combinations.

The term "use" may be considered synonymous with the term "utilize."

As used herein, "substantially," "about," and similar terms are used as terms of approximation rather than terms of degree and are to take into account the inherent variation in measured or calculated values that a general engineer in the relevant technical field would recognize.

In this specification, although the terms first, second, third, etc. may be used to describe various elements, components, regions, layers and/or sections, these elements, components, regions, layers and/or sections should not be limited by these terms. Such terms are used to distinguish one element, component, region, layer, or section from another element, component, region, layer, or section. Accordingly, a first element, component, region, layer, or section discussed below may be named a second element, component, region, layer, or section without departing from the teachings of the example embodiments.

To illustrate the relationship of one element or feature to another element(s) or feature(s) as shown in a drawing, for ease of description, spatially relative terms such as "beneath," "below," "lower," "above," "upper," etc. may be used herein. Spatial relative position will be understood to encompass different directions of the device in use or operation in addition to the direction depicted in the figures. For example, if the device in the drawing is turned over, elements described as "below" or "lower" other elements are understood to be "above" or "upper" other elements. Accordingly, the term "down" may encompass both upward and downward directions.

The terms used in this specification are for describing embodiments of the present disclosure and are not intended to limit the present disclosure.

Hereinafter, an object overlapping detection apparatus according to an embodiment of the present disclosure will be described in detail with reference to the drawings.

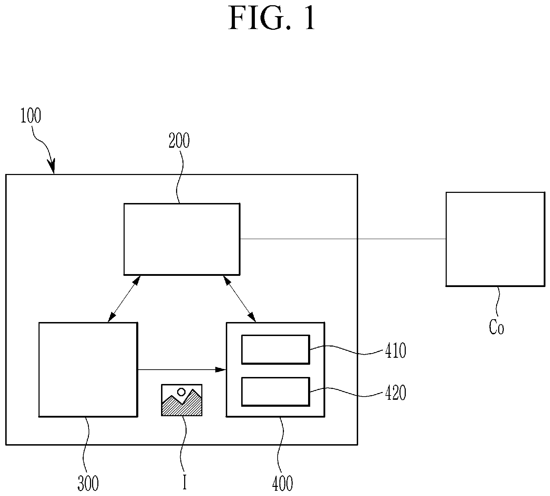

FIG. 1 illustrates a schematic diagram showing an object overlap detection apparatus according to an embodiment of the present disclosure.

Referring to FIG. 1, the object overlap detection apparatus 100 according to an embodiment of the present disclosure includes a photographing unit 300, a determining unit 400, and a controller 200.

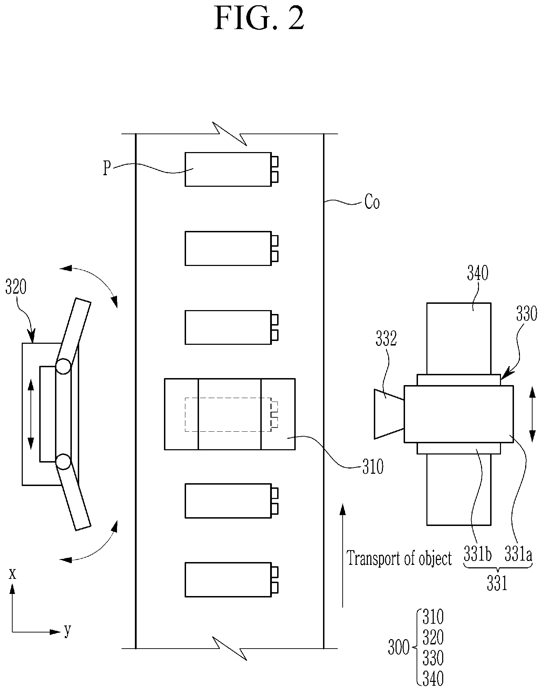

The photographing unit 300 photographs objects P (see FIG. 2) at multiple angles. The photographing unit 300 acquires an image I by photographing the objects P (see FIG. 2). A detailed description of the photographing unit 300 will be provided later.

The determining unit 400 determines whether the objects P overlap by analyzing the image I acquired by the photographing unit 300

More specifically, the determining unit 400 determines a state in which the objects P overlap in a vertical direction by analyzing the image I obtained by photographing the objects P in the vertical direction among images acquired by the photographing unit 300. Then, the determining unit 400 determines a state in which the objects P are overlapped so as to be staggered by analyzing the image I obtained by photographing a border of the objects P from the side. A detailed process by which the determining unit 400 analyzes the image I and determines whether the objects P overlap will be described later.

If the determining unit 400 determines that the objects P are overlapped, the controller 200 provides a notification to another element that the objects P are overlapped. For example, although not shown in the drawing, a monitor that outputs an operating state of the object overlap detection apparatus 100 according to an embodiment of the present disclosure may output that the objects P are overlapped. As another example, the notification may be an alarm signal. As yet another example, when the objects P overlap, the controller 200 may also be able to blink lights.

The controller 200 controls an operation of the photographing unit 300 and transport of the objects P. For example, when the objects P overlap, the controller 200 may stop an operation of the conveyor unit Co that transports the objects to stop the overlapped objects P from being transported to a next process. On the other hand, when the determining unit 400 determines that the objects P do not overlap and that one object P is being transported normally, the controller 200 may continuously operate the conveyor unit Co to transfer the object P to the next process.

The controller 200 and the determining unit 400 as described above may be included in one or more microprocessors.

FIG. 2 illustrates a top plan view showing a state in which one photographing unit is installed on a conveyor unit.

Referring to FIG. 2, the photographing unit 300 may include, e.g., a lighting member 310, a reflection member 320, and a photographing member 330.

The object P analyzed in the object overlap detection apparatus 100 according to an embodiment of the present disclosure may be, for example, an electrode plate used to manufacture a rechargeable battery. As described above, the electrode plate may be transported in an x-axis direction by the conveyor unit Co.

The lighting member 310 is positioned to be spaced apart from the object P and irradiates light to the object P. The lighting member 310 radiates light toward the object P such that the photographing member 330 (described later) may clearly photograph the object P. To this end, the lighting member 310 may radiate light to the object P at various angles. A detailed description of the lighting member 310 for this purpose will be provided below.

The reflection member 320 is positioned adjacent to the object P and reflects the object P to which light is irradiated. The reflection member 320 for this purpose may have a variable relative position with respect to the object P, and a detailed description thereof will be provided below.

The photographing member 330 photographs the object P reflection by the reflective member 320. A shape of the object P is reflected by the reflection member 320 and then incident on the photographing member 330. The photographing member 330 may acquire an image from the shape of the incident on the photographing member 330.

The photographing unit 300 as described above may be installed adjacent to the conveyor unit Co, and the lighting member 310, the reflection member 320, and the photographing member 330 may be individually driven with respect to the conveyor unit Co. Accordingly, the photographing unit 300 may photograph the object P transported by the conveyor unit Co at multiple angles. A detailed description of each of the lighting member 310, the reflection member 320, and the photographing member 330 included in the photographing unit 300 for photographing the object P at multiple angles will be described below.

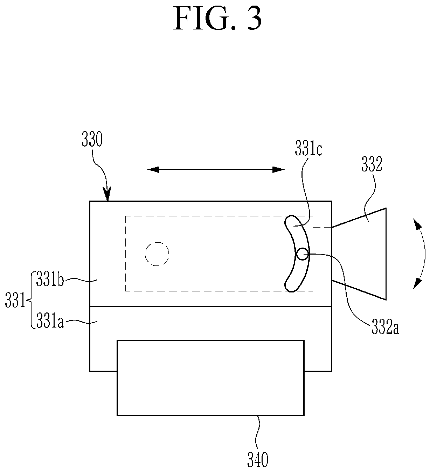

FIG. 3 illustrates a side view showing a photographing member included in a photographing unit.

Referring to FIG. 3, the photographing member 330 may include, for example, a body portion 331 and a camera portion 332.

The body portion 331 may include a first frame 331a and a second frame 331b that moves in one direction with respect to the first frame 331a. Movement of the second frame 331b relative to the first frame 331a may be implemented by a separate motor. The second frame 331b may be linearly moved back and forth by the motor to move closer to or farther away from the conveyor unit Co. For example, as shown in FIG. 2, the second frame 331b may be moved along a y-axis direction.

The camera portion 332 is installed inside the body portion 331 so as to be rotatable in a vertical direction with respect to the body portion 331. More specifically, the camera portion 332 may be installed inside the second frame 331b. There may be a guide groove 331c on a side surface of the second frame 331b, with the guide groove 331c having a circular arc shape. Additionally, there may be a guide protrusion 332a installed on a side surface of the camera portion 332 to extend through the guide groove 331c. A movement path of the guide protrusion 332a may be limited by the guide groove 331c.

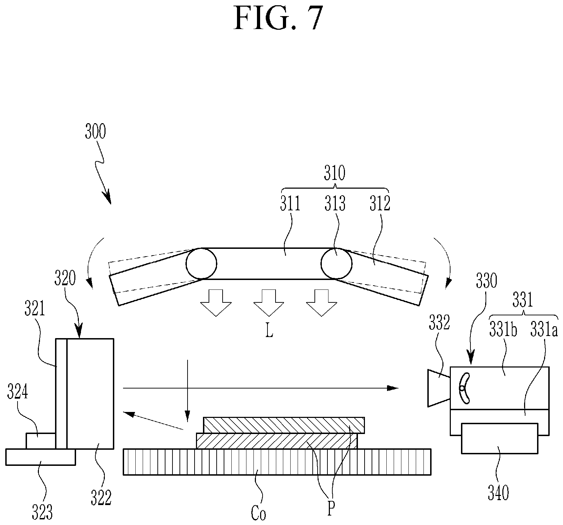

A side of the camera portion 332 opposite to the side where the guide groove 331c is positioned may be rotatably coupled to the second frame 331b. Accordingly, the camera portion 332 may be rotated in the vertical direction (z-axis direction, see FIG. 7) with respect to the second frame 331b. Rotation of the camera portion 332 with respect to the second frame 331b may be driven by a separate motor.

The photographing member 330 as described above may change an angle of the camera portion 332 and photograph the object P while changing a relative distance to the object P.

Meanwhile, the photographing unit 300 may further include a position adjustment member 340. The position adjustment member 340 is coupled to the photographing member 330 and moves the photographing member 330 in a direction parallel to the direction in which the object P is transported. For example, as shown in FIG. 2, the position adjustment member 340 may be positioned parallel to the conveyor unit Co. The position adjustment member 340 may be coupled to the first frame 331a of the body portion 331 included in the photographing member 330. Although not specifically shown in the drawing, a portion of the position adjustment member 340 coupled to the first frame 331a may have a rail shape. However, a method of coupling the first frame 331a and the position adjustment member 340 is not limited to using a rail.

The first frame 331a may be coupled to the position adjustment member 340 and may be moved along a longitudinal direction of the position adjustment member 340. More specifically, the first frame 331a may be linearly moved back and forth along the x-axis direction. The first frame 331a may be moved at a same transfer speed as a transfer speed of the object being transferred. In addition, after the photographing member 330 completes photographing the object, the first frame 331a may be restored to its initial position.

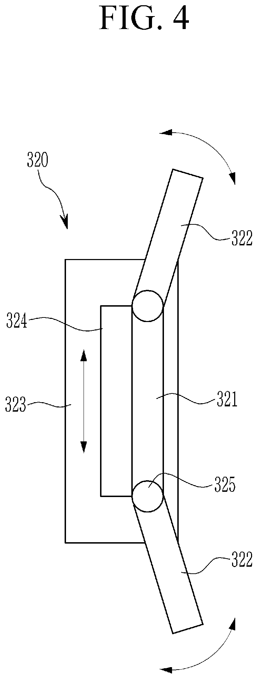

FIG. 4 illustrates a top plan view showing a reflective member included in a photographing unit.

Referring to FIG. 4, the reflection member 320 includes, e.g., a support unit 323, a first reflector 321, a moving unit 324, a second reflector 322, and a reflection driver 325.

The support unit 323 may be installed in a workspace. The support unit 323 may be installed adjacent to a side surface of the conveyor unit Co. The workspace may be a space where the conveyor unit Co is installed.

The first reflector 321 is positioned in the vertical direction with respect to the support unit 323. The first reflector 321 may be, for example, a reflective mirror that provides a reflection of an object. An image of the object P reflected by the first reflector 321 may be incident on the photographing unit 300.

The moving unit 324 is coupled to the first reflector 321 and slides in one direction with respect to the support unit 323. That is, the moving unit 324 may move the first reflector 321 linearly back and forth with respect to the support unit 323. A movement path of the first reflector 321 may be parallel to a transport direction of the object P transported by the conveyor unit Co.

The second reflector 322 is rotatably coupled to the first reflector 321. More specifically, the second reflector 322 may be rotatably coupled to a side surface of the first reflector 321. Like the first reflector 321, the second reflector 322 may also be a reflection mirror that provides a reflection of an object.

The reflection driver 325 rotates the second reflector 322 with respect to the first reflector 321. Accordingly, an angle between the first reflector 321 and the second reflector 322 may be varied.

A combined size of the above-described first and second reflectors 321 and 322 may be larger than a size of the object. Accordingly, the reflection member 320 may reflect an image of the object P in various directions as the second reflector 322 is rotated by the moving unit 324 and the reflection driver 325. An image reflected by the reflection member 320 may be incident on the photographing unit 300.

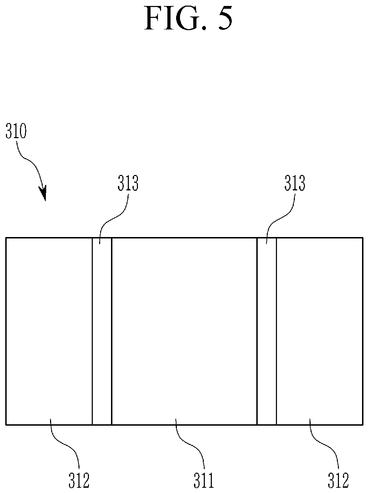

FIG. 5 illustrates a bottom view showing a lighting member included in a photographing unit.

Referring to FIG. 5, the lighting member 310 may include, for example, a first lighting unit 311, a second lighting unit 312, and a lighting driving unit 313.

The first lighting unit 311 irradiates light towards the object P. The first lighting unit 311 may be installed above the conveyor unit Co. Light from the first lighting unit 311 may be irradiated toward the conveyor unit Co from upward to downward. The first lighting unit 311 may be fixed to a structure of the workspace. The first lighting unit 311 may irradiate light to a central portion of the conveyor unit Co.

The second lighting unit 312 is rotatably coupled to the first lighting unit 311 and irradiates light to the object P. There may be more than one second lighting unit 312. Light of the second lighting unit 312 may be irradiated from upward to downward with respect to the object P, or may be irradiated obliquely to the side surface of the object P according to an angle of the second lighting unit 312 with respect to the first lighting unit 311.

The lighting driver 313 may rotate the second lighting unit 312 with respect to the first lighting unit 311. The lighting driver 313 may be, for example, a rotating motor, but the present disclosure is not limited thereto.

A combined size of the first lighting unit 311 and the second lighting unit 312 may be larger than the size of the object. Accordingly, as the second lighting unit 312 rotates, light may be irradiated to various regions of the object P. That is, the lighting member 310 may irradiate light to the object P at various angles.

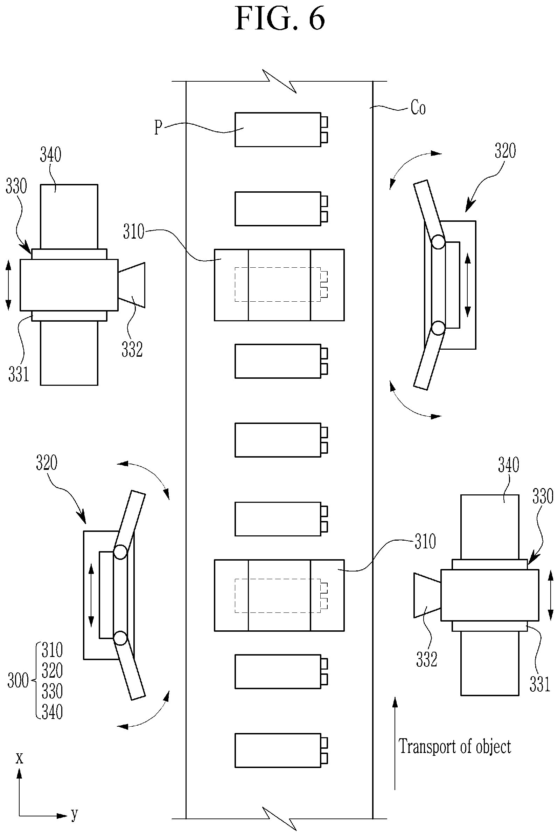

FIG. 6 illustrates a top plan view showing a state in which two photographing units are installed adjacent to a conveyor unit.

Referring to FIG. 6, in the object overlapping detection device 100 according to an embodiment of the present disclosure, there are two photographing units 300, and the two photographing units 300 may be spaced apart from each other along a region where the object P is transported. That is, each of the two imaging units 300 may be spaced apart from each other along the x-axis direction.

In a case where there is only one photographing unit 300, in order for the photographing unit 300 to perform side or vertical photography of the object P, the photographing member 330, the reflection member 320, and the lighting member 310 may have to be operated each time the object P is photographed. On the other hand, when there are two photographing units 300, a first photographing unit 300 may be set to enable side photographing of the object P, and a second photographing unit 300 may be set to enable vertical photographing of the object P. Accordingly, when there are two photographing units 300 (see FIG. 6), a time for photographing the object P may be significantly shortened compared to when there is one photographing unit 300 (see FIG. 2).

FIG. 7 illustrates a front view showing a process in which a photographing unit photographs an object from top to bottom.

Referring to FIG. 7, the above-described controller 200 may control the photographing unit 300 to photograph the objects P from above to below.

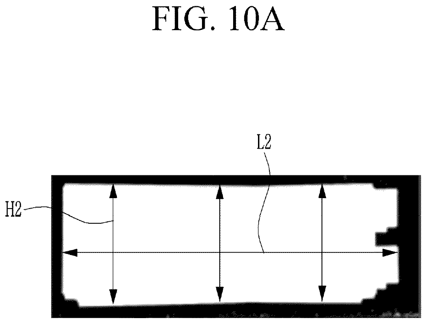

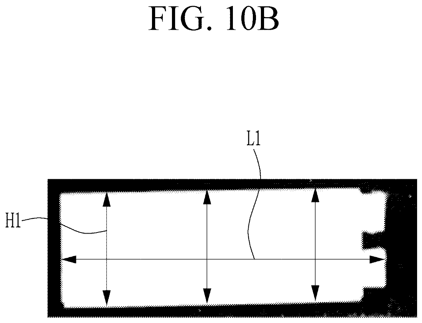

The above-described determining unit 400 may compare a shape of the objects P in an image (see FIG. 10A) obtained by the photographing unit 300 photographing the objects P (see FIG. 7) from top to bottom and a shape of the object P in the reference image photographed when there is one object P (see FIG. 10B), and if they are different, may determine that the two objects P overlap each other.

Referring again to FIG. 1, the determining unit 400 that determines overlap of the objects P as described above may include, e.g., an image converter 410 and a binarizing unit 420.

The image converter 410 converts a color image obtained from the photographing unit 300 into a black and white image. To this end, the above-described photographing unit 300 may include a color camera. However, the photographing unit 300 is not limited to acquiring a color image by photographing the objects P with a color camera. The above-mentioned photographing unit 300 may include a black-and-white camera (mono camera) and may be capable of acquiring a black-and-white image by photographing the objects P.

The image converter 410 adjusts brightness and contrast of an image to black and white the image.

The binarizing 420 generates a binarized image by performing binarization on pixels of the black-and-white image based on a threshold. More specifically, the binarizing 420 detects pixels with brightness below a certain level and removes noise through blurring. Finally, the binarizing 420 extracts the outline by extracting the binary image.

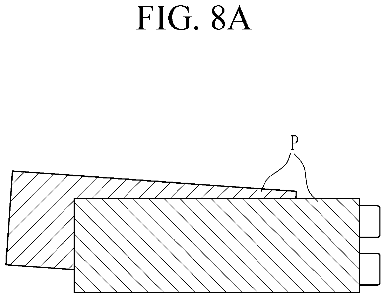

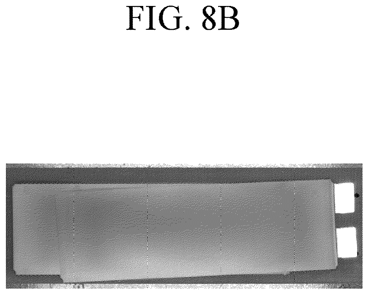

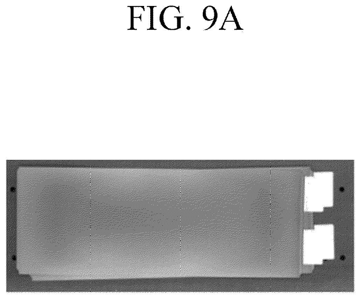

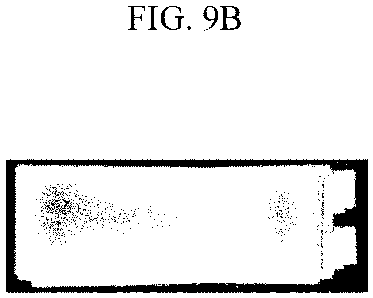

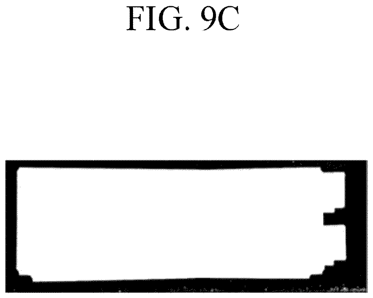

FIGS. 8A and 8B illustrate a drawing of a case in which objects overlap and a photograph of actual objects, and FIGS. 9A, 9B and 9C illustrate an image sequentially showing a process of a determining unit binarizing a black and white image.

FIG. 8A shows two objects P overlapped and offset from each other. FIG. 8B shows a black and white image obtained by photographing an actual object P.

FIG. 9A shows a black-and-white image obtained by converting a color image obtained by photographing the object P into black and white, FIG. 9B shows a binarized black and white image, and FIG. 9C shows an image with noise removed.

The determining unit 400 compares a width and length of an image acquired by the photographing unit 300 with a width and length of a reference image. The determining unit 400 may detect the objects P that are positioned in a staggered manner by the photographing unit 300 to photograph the objects P from above to below.

FIG. 10A shows an image captured by the photographing unit 300 and binarized in a state in which two objects are overlapped and offset from each other. FIG. 10B shows a reference image in which one object is photographed by the photographing unit 300 and binarized.

The determining unit 400 determines that the objects P are overlapped when a width H2 in an image acquired by the photographing unit 300 (FIG. 10A) is different from a width H1 in a reference image (FIG. 10B), or a length L2 in the image acquired by the photographing unit 300 (FIG. 10A) is different from a length L2 in the reference image (FIG. 10B).

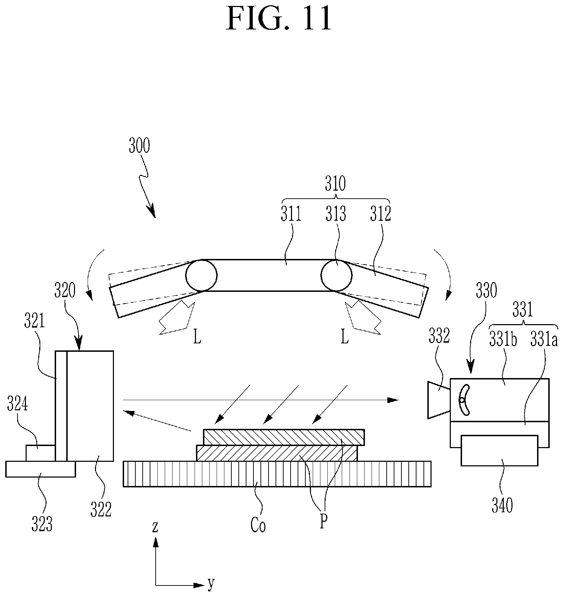

FIG. 11 illustrates a front view showing a process in which a photographing unit photographs a side surface of an object.

Referring to FIG. 11, the controller 200 may control the photographing unit 300 to photograph a side surface of the object P. In this case, the second lighting unit 312 may be rotated at a certain angle with respect to the first lighting unit 311 by the lighting driver 313. Accordingly, light generated by the second lighting unit 312 may irradiated the side surface of the object P.

The second reflector 322 may be rotated at a certain angle with respect to the first reflector 321 by the reflection driver 325. Accordingly, an image of the side surface of the object P is reflected by the first reflector 321 or the second reflector 322. The camera portion 332 included in the photographing member 330 may photograph the side surface of the object P in the image of the second reflector 322.

The determining unit 400 may determine that the two objects P overlap each other when two boundaries are detected at edges of the objects P in an image obtained by the photographing unit 300 photographing the side surface of the object P.

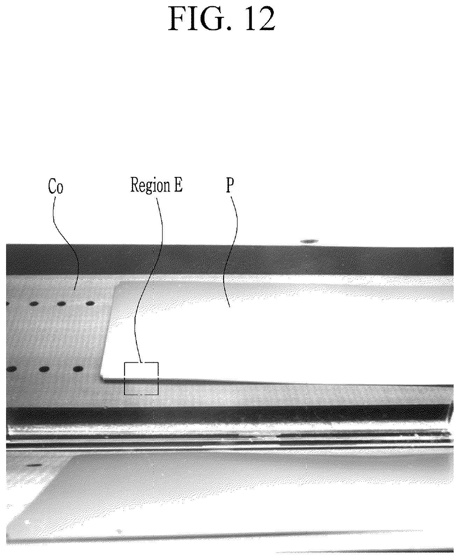

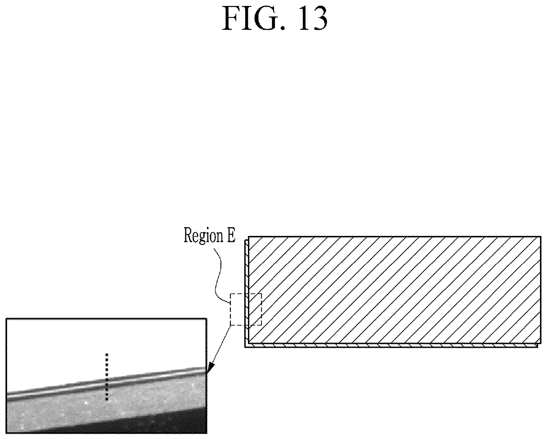

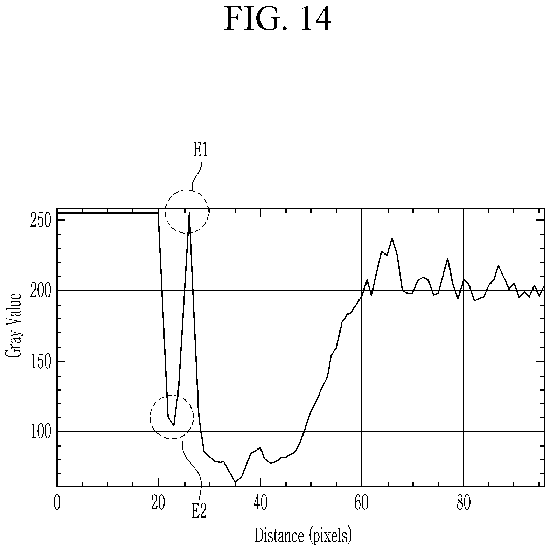

FIG. 12 illustrates an image taken when objects overlap. FIG. 13 illustrates an enlarged image taken when objects overlap. FIG. 14 illustrates a gray scale according to vertical displacement in the image taken when the objects of FIG. 13 overlap.

Herein, in the graph shown in FIG. 14, the x-axis values indicate a vertical displacement in a region E, and the y-axis values represent gray values.

Referring to FIG. 12 to FIG. 14, an image obtained by photographing the object P is converted into a black-and-white image, and then the gray value according to the vertical displacement is extracted. When two objects P overlap each other, two inflection points E1 and E2 occur in a gray graph for a specific region. The two inflection points E1 and E2 may be detected by differentiating the gray value, and the inflection points E1 and E2 indicate that there are two edges. Accordingly, through differentiation, it may be confirmed that the objects P overlap from the inflection points.

The object overlap detection apparatus 100 according to an embodiment of the present disclosure as described above may include a photographing unit 300, a determining unit 400, and a controller 200. First, the photographing unit 300 may photograph the objects P in the vertical direction, and the determining unit 400 may detect a state in which the objects P are overlapped in a staggered manner. Next, the photographing unit 300 may photograph side surfaces of the objects P, and the determining unit 400 may accurately detect a state in which the objects P are overlapped side by side in the vertical direction without crossing each other.

In conventional rechargeable battery manufacturing equipment that does not detect overlapping objects, the holding unit moves electrode plate sheets from the conveyor unit to the stack unit, and the stack unit that stacks the electrode plates. But, in the case of overlapping electroplate sheets on the conveyor unit, one of the two overlapping electrode plate sheets may remain on the conveyor unit. Sheets remaining on the conveyor unit may collide with surrounding equipment during the conveyor operation in a next process and become The fragmented pieces can have a negative impact on the manufacturing of rechargeable batteries.

On the other hand, the object overlap detection apparatus 100 according to an embodiment of the present disclosure may accurately and quickly detect a overlapping state of the objects P while the objects P are being transported. Accordingly, it is possible to prevent the object P/electrode plate sheet remaining in the conveyor unit Co from being damaged as it collides with equipment performing the next process. Therefore, it is possible to prevent the object P from being damaged and fragmented, thereby preventing adverse affects on the manufacturing facilities of the rechargeable battery.

An object overlap detection method for detecting object overlap using the object overlap detection apparatus 100 will be described in detail with reference to the drawings.

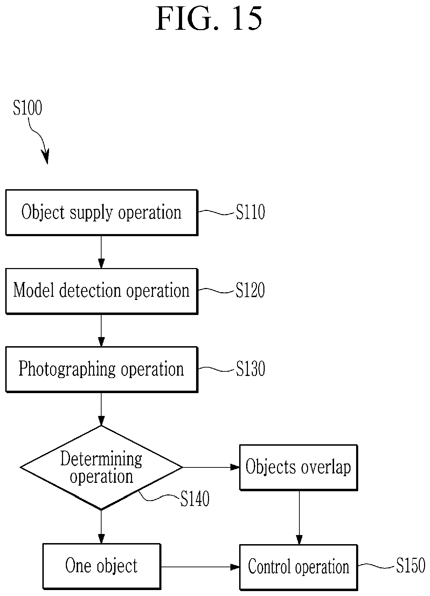

FIG. 15 illustrates a flowchart showing an object overlap detection method according to an embodiment of the present disclosure.

Referring to FIG. 15, the object overlap detection method (S100) according to an embodiment of the present disclosure may include a photographing operation (S130), a determining operation (S140), and a control operation (S150).

In the photographing operation (S130), one or more images are acquired by photographing an object at various angles. The photographing operation (S130) may be performed by a photographing unit. The object may stop for a certain period of time while being transported by the conveyor unit. In this case, the photographing unit photographs the object.

The determining operation (S140) analyzes the image to determine whether objects overlap. The determining operation (S140) may be performed by a determining unit. As described above, the determining unit determines a state in which the objects overlap in the vertical direction by analyzing an image obtained by photographing the object in the vertical direction among images acquired by the photographing unit, and the determining unit determines a state in which objects are overlapped by analyzing an image obtained by photographing a border of the object from the side.

When it is determined in the determining operation (S140) that the objects overlap, at least one of a notification signal is generated or transport of the objects is controlled in the control operation (S150). Herein, the notification signal is a notification signal indicating that objects are overlapping.

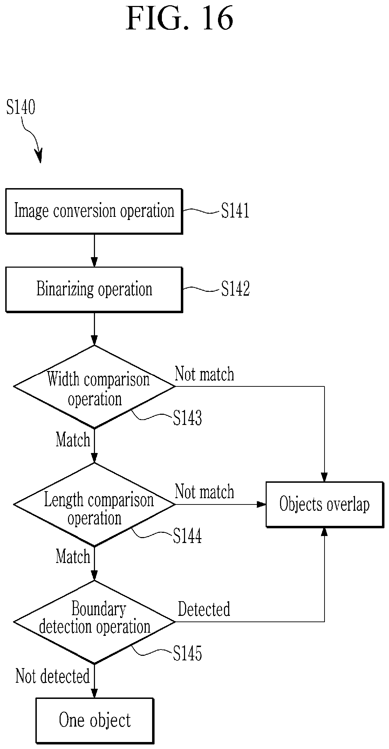

FIG. 16 illustrates a flowchart showing a determining operation included in an object overlap detection method.

Referring to FIG. 16, the determining operation (S140) may include, e.g., an image conversion operation (S141) and a binarizing operation (S142).

The color image obtained in the photographing operation (S130) is converted to a black and white image in the image conversion operation (S141). The image conversion operation (S141) is performed in an image converter. In the image conversion operation (S141), brightness and contrast of the image are adjusted to black and white.

A binarized image is generated by performing binarization on pixels of the black-and-white image based on a threshold in the binarizing operation (S142). The binarizing operation (S142) is performed in the binarizing unit. In the binarizing operation (S142), the binarizing unit detects pixels below a certain brightness, removes noise through blurring, and extracts an outline by extracting the binary image.

In the above-described object overlap detection apparatus 100, the object may be photographed from upward to downward (see FIG. 7). In such a case, in the determining operation (S140), a shape of the objects in an image obtained by photographing the objects from top to bottom and a shape of the object in the reference image photographed when there is one object are compared. If the image obtained by photographing and the reference image are different, it may be determined that the two objects overlap each other.

The determining operation (S140) may include a width comparison operation (S143).

In the width comparison operation (S143), a length of the objects in the width direction in an image obtained by photographing the objects from top to bottom and a length of the object in the width direction in the reference image photographed when there is one object are compared. If the two length values of the width direction are different from each other, it is determined that the objects overlap in the width comparison operation (S143).

In addition, the determining operation (S140) may include a length comparison operation (S144).

In the length comparison operation (S144), a length of the objects in the longitudinal direction in an image obtained by photographing the objects from top to bottom and a length of the object in the longitudinal direction in the reference image photographed when there is one object are compared. If the length values of the longitudinal direction are different from each other, it is determined that the objects overlap in the length comparison operation (S144).

As described in the above-described object overlapping detection apparatus 100, a side surface of the object may be photographed (see FIG. 11) in the photographing operation (S130). In such a case, the determining operation (S140) may include a boundary detection operation (S145).

In the boundary detection operation (S145), when two boundaries are detected at an edge of the object in an image obtained by photographing the side surface of the object, it is determined that two objects overlap each other.

Returning to FIG. 15, the object overlap detection method (S100) according to an embodiment of the present disclosure may further include an object supply operation (S110) and a model detection operation (S120).

The object may be supplied in the object supply operation (S110). The conveyor unit may continuously supply objects to the object overlap detection apparatus.

A model of the object supplied in the object supply step (S110) may be detected in the object supply operation (S110). The model detection operation (S120) may be performed by an operator directly inputting, for example, a model name of a specific electrode plate used in rechargeable battery manufacturing among various objects (electrode plates) into the object overlap detection apparatus. Alternatively, the model detection operation (S120) may be performed by, as another example, a barcode reader (not shown) scanning a barcode attached to one side of the electrode plate. The barcode may be linked to model information of the electrode plate stored in a separate server.

In accordance with the object overlap detection method (S100) according to the present disclosure, it is possible to quickly detect that objects are overlapped by automating a process of detecting overlapping objects.

The object overlap detection method (S100) according to an embodiment of the present disclosure has been described in detail while describing the object overlap detection apparatus 100, and thus a further detailed description thereof will be omitted.

Although several embodiments of the present disclosure have been described above, and while embodiments of the present disclosure have been particularly shown and described with reference to the accompanying drawings, the specific terms used herein are only for the purpose of describing and are not intended to define the meanings thereof or be limiting of the scope of the disclosure. Therefore, those skilled in the art will understand that various modifications and other equivalent embodiments of the present disclosure are possible.

### <Description of Symbols>

| | | | |
|---|---|---|---|
| 100: | object overlap detection apparatus | | |
| 200: | controller | 300: | photographing unit |
| 310: | lighting member | 311: | first lighting unit |
| 312: | second lighting unit | 313: | lighting driver |
| 320: | refection member | 321: | first reflector |
| 322: | second reflector | 323: | support unit |
| 324: | moving unit | 325: | reflection driver |
| 330: | photographing member | 331: | body portion |
| 331a: | first frame | 331b: | second frame |
| 332: | camera portion | 340: | position adjustment member |
| 400: | determining unit | 410: | image converter |
| 420: | binarizing unit | Co: | conveyor unit |
| P: | object | I: | image |

## Claims

1. An object overlap detection apparatus comprising:
one or more photographing units (300) configured to photograph objects from multiple angles;
a determining unit (400) configured to at least one of (i) determine whether there are overlapping objects by analyzing an image obtained by photographing the objects in a vertical direction using the one or more photographing units (300) and (ii) determine whether there are overlapping objects by analyzing an image obtained by photographing a side of the objects using the one or more photographing unit (300); and
a controller (200) configured to receive information indicating whether the objects overlap from the determination units (300) and to control one or more of an alarm signal, an operation of the photographing units (300), and transport of the objects.

2. The object overlap detection apparatus of claim 1, wherein the photographing unit (300) includes:
a lighting member (310) spaced apart from the objects and configured to emit light towards the objects;
a reflecting member (320) positioned adjacent to the objects and configured to reflect an image of the objects; and
a photographing member (330) configured to photograph the image of the objects reflected by the reflecting member (320).

3. The object overlap detection apparatus of claim 2, wherein the photographing unit (300) includes:
a body portion (331) including a first frame (331a) and a second frame (331b) that is moveable relative to the first frame (331a); and
a camera unit (300) positioned inside the body portion (331), the camera unit (300) being rotatable in the vertical direction relative to the body portion (331).

4. The object overlap detection apparatus of claim 2 or 3, wherein the photographing unit (300) further includes a position adjustment member (340) coupled to the photographing member (330) and configured to move the photographing member (330) in a direction parallel to a direction in which the objects are transported.

5. The object overlap detection apparatus of claims 2 to 4, wherein the lighting member (310) includes:
a first lighting unit (311) configured to emit light towards the objects;
one or more second lighting units (312) rotatably coupled to the first lighting unit (311) and configured to emit light towards the object; and
a lighting driver configured to rotate the one or more second lighting units (312) relative to the first lighting unit (311).

6. The object overlap detection apparatus of claims 2 to 5, wherein the reflecting member (320) includes:
a support unit (323);
a first reflector (321) positioned in the vertical direction with respect to the support unit (323);
a moving unit (324) coupled to the first reflection part and configured to move relative to the support unit (323);
a second reflector (322) rotatably coupled to the first reflector (321); and
a reflection driver (325) configured to rotate the second reflector (322) relative to the first reflector (321).

7. The object overlap detection apparatus of claims 1 to 6, wherein there are two photographing units (300), and the two photographing units (300) are spaced apart from each other along a region where the objects are transported and/or
wherein the controller (200) controls the photographing unit (300) to photograph the objects from top to bottom and/or
wherein the determining unit (400) compares a shape of the objects in an image obtained by photographing the objects from top to bottom and a shape of an object in a reference image of one object, and the determining unit (400) determines that there are overlapping objects based on the comparison.

8. The object overlap detection apparatus of claims 1 to 7, wherein the controller (200) controls the photographing unit (300) to photograph side surfaces of the objects and/or
wherein the determining unit (400) determines that two objects overlap when two boundaries are detected at an edge of the objects in an image obtained by the one or more photographing units (300) photographing side surfaces of the objects.

9. The object overlap detection apparatus of claims 1 to 8, wherein the determining unit (400) includes:
an image conversion unit (300) configured to convert a color image obtained from the one or more photographing units (300) into a black-and-white image; and
a binarizing unit (300) configured to generate a binarized image by performing binarization on pixels of the black-and-white image.

10. An object overlap detection method comprising:
a photographing operation of acquiring one or more images by photographing an object from multiple angles;
a determining operation of determining that there are overlapping objects by at least one of (i) analyzing an image obtained by photographing the objects in a vertical direction among images acquired in the photographing operation and (ii) analyzing an image obtained by photographing a side of the objects in the photographing operation; and
a control operation of controlling one or more of a notification signal and transport of the objects when it is determined in the determining operation that there are overlapping objects.

11. The object overlap detection method of claim 10, wherein the objects are photographed from above to below in the photographing operation.

12. The object overlap detection method of claim 10 or 11, wherein in the determining operation a shape of the objects in an image obtained by photographing the objects from top to bottom and a shape of an object in a reference image of one object are compared, and it is determined that there are overlapping objects based on the comparison and/or
wherein the determining operation includes a width comparison operation of comparing a length of the objects in a width direction in an image obtained by photographing the objects from top to bottom in the photographing operation and a length in a width direction of one object in a reference image and/or
wherein the determining operation includes a length comparison operation of comparing a length of the objects in the longitudinal direction in an image obtained by photographing the objects from top to bottom in the photographing operation and a length in a longitudinal direction of one object in a reference image.

13. The object overlap detection method of claims 10 to 12, wherein a side surface of the objects are photographed in the photographing operation.

14. The object overlap detection method of claims 10 to 13, wherein the determining operation includes a boundary detection operation of determining that two objects overlap when two boundaries are detected at an edge of the objects in an image obtained by photographing side surfaces of the objects in the photographing operation.

15. The object overlap detection method of claims 10 to 14, wherein the determining operation includes:
an image conversion operation of converting a color image obtained in the photographing operation into a black-and-white image; and
a binarizing operation of generating a binarized image by performing binarization on pixels of the black-and-white image.
